# EUROPEAN PATENT APPLICATION

(11) **EP 4 590 010 A1**
(43) Date of publication of application: **23.07.2025**
(21) Application number: 23871584.1
(22) Date of filing: 23.08.2023
(51) Int. Cl.: H04W 16/00, H04W 88/18

(54) **INFORMATION PROCESSING DEVICE AND INFORMATION PROCESSING METHOD**

(30) Priority: 27.09.2022 JP 2022153554
(71) Applicant: Sony Group Corporation, Tokyo 108-0075 (JP)
(72) Inventor: GOTO, Jungo, Tokyo 108-0075 (JP); IKENAGA, Toshiya, Tokyo 108-0075 (JP); NISHIKAWA, Tomoyuki, Tokyo 108-0075 (JP)
(74) Representative: D Young & Co LLP
(86) International application number: PCT/JP2023/030273
(87) International publication number: WO 2024/070343

(57) **Abstract**

An information processing device of the present disclosure includes a network interface and a processor. The processor transmits a private network construction request to another information processing device, and receives a private network construction completion notification from the another information processing device via the network interface. The another information processing device can generate a core network instance. The construction request is a construction request of a private network including a base station determined on the basis of location information of a UE and a request condition of the UE, and a core network instance of a core network that provides a network service via the base station.

## Description

### Field

The present disclosure relates to an information processing device and an information processing method. Background

The first standard of a fifth generation mobile communication system, so-called 5G, was formulated in 2018 as Rel-15, and a service corresponding to 5G was started in Japan in March 2020. In addition, service provision in a form of local 5G in which an entity other than a telecommunications carrier provides 5G service is also starting. The 5G has features of enhanced mobile broadband (eMBB), ultra-reliable and low latency communications (URLLC), and massive machine type communication (mMTC).

In the 5G, in addition to provision of a best effort type communication service, provision of a quality guarantee type communication service is expected from features of ultra-high speed, ultra-reliable and low latency communications, and massive machine type communication.

### Citation List

### Patent Literature

Patent Literature 1: JP 2021-536164 A
Patent Literature 2: JP 2021-175108 A

### Summary

### Technical Problem

In a public network, a large number of terminal devices are connected, and thus, when traffic rapidly increases, it is necessary to consider fairness between users, and quality guarantee may be difficult.

On the other hand, in a private network such as the local 5G, it is possible to freely control a limit of the number of connected terminals, a traffic amount, and a resource assignment amount. As described above, the private network can implement quality guarantee specialized for a service or an application to be used.

However, construction of the private network requires installation of equipment such as a base station. A mechanism capable of constructing a quality guarantee type private network more easily is desired.

Therefore, the present disclosure provides a mechanism capable of constructing a quality guarantee type private network more easily.

Note that the above problem or object is merely one of a plurality of problems or objects that can be solved or achieved by a plurality of embodiments disclosed in the present specification.

### Solution to Problem

An information processing device of the present disclosure includes a network interface and a processor. The processor transmits a private network construction request to another information processing device, and receives a private network construction completion notification from the another information processing device via the network interface. The another information processing device can generate a core network instance. The construction request is a construction request of a private network including a base station determined on the basis of location information of a UE and a request condition of the UE, and a core network instance of a core network that provides a network service via the base station.

### Brief Description of Drawings

FIG. 1 is a diagram for explaining an outline of information processing according to a first embodiment of the present disclosure.
FIG. 2 is a diagram for explaining an outline of the information processing according to the first embodiment of the present disclosure.
FIG. 3 is a diagram illustrating an example of infrastructure sharing.
FIG. 4 is a block diagram illustrating a configuration example of an application server according to the first embodiment of the present disclosure.
FIG. 5 is a diagram illustrating a configuration example of a RAN DB device according to the first embodiment of the present disclosure.
FIG. 6 is a block diagram illustrating a configuration example of a cloud server according to the first embodiment of the present disclosure.
FIG. 7 is a diagram illustrating a configuration of a network architecture of a 5G system.
FIG. 8 is a diagram illustrating a configuration example of a base station according to the first embodiment of the present disclosure.
FIG. 9 is a diagram illustrating a configuration example of a terminal device according to the first embodiment of the present disclosure.
FIG. 10 is a flowchart illustrating an example of a flow of construction processing according to the first embodiment of the present disclosure.
FIG. 11 is a diagram illustrating an example of an NW selection method according to a second embodiment of the present disclosure.
FIG. 12 is a diagram for explaining a construction example of a private network according to a third embodiment of the present disclosure.
FIG. 13 is a flowchart illustrating an example of a flow of private network construction processing according to the third embodiment of the present disclosure.
FIG. 14 is a diagram illustrating an example of an NW selection method according to a fourth embodiment of the present disclosure.

### Description of Embodiments

Hereinafter, an embodiment of the present disclosure will be described in detail with reference to the attached drawings. Note that, in the present specification and the drawings, components having substantially the same functional configuration are denoted by the same reference sign, and redundant description is omitted.

In addition, in the present specification and the drawings, similar components of the embodiment may be distinguished from each other by attaching different alphabets or numbers after the same reference sign. Note that, in a case where it is not particularly necessary to distinguish similar components from each other, only the same reference sign is attached.

One or more embodiments (including Examples, Modifications, and Application Examples) described below can be each independently performed. On the other hand, at least a part of each of the plurality of embodiments described below may be appropriately combined with at least a part of another embodiment to be performed. The plurality of embodiments can include novel features different from each other. Therefore, the plurality of embodiments can contribute to solving different objects or problems, and can exhibit different effects.

### <<1. First Embodiment>>

### <1.1. Background>

As described above, in the 5G, in addition to provision of a best effort type communication service, provision of a quality guarantee type communication service is expected from features of ultra-high speed, ultra-reliable and low latency communications, and massive machine type communication.

When a wireless network to which a terminal device (hereinafter, also referred to as a user equipment (UE)) is connected is a public network, there may be a case where a quality guarantee type communication service cannot be provided. For example, since a large number of UEs are connected in a public network, when traffic rapidly increases, it is difficult to satisfy requested communication quality from a viewpoint of fairness between users.

On the other hand, when the wireless network to which the UE is connected is a private network, there is a possibility that a quality guarantee type communication service can be provided. This is because a service area is limited in the private network, and the private network can provide a communication service in which a UE used in a specific service occupies a radio resource (frequency).

In the private network, the number of UEs to be connected can be limited, and a traffic amount and a resource assignment amount can be freely controlled. As described above, the private network has a higher degree of freedom in operation than the public network, and easily implements quality guarantee specialized for a service to be provided and an application used by a UE.

On the other hand, when a service by the private network is provided, it is necessary to construct the private network. There is a construction service that constructs the private network, but in this construction service, a provider that provides the private network service needs to install equipment such as a base station. In addition, in a conventional construction service, quality guarantee is not considered.

Therefore, a mechanism capable of constructing a quality guarantee type private network is desired. Note that the private network such as Local 5G may be referred to as a non-public network (NPN).

### <1.2. Outline of proposed technique>

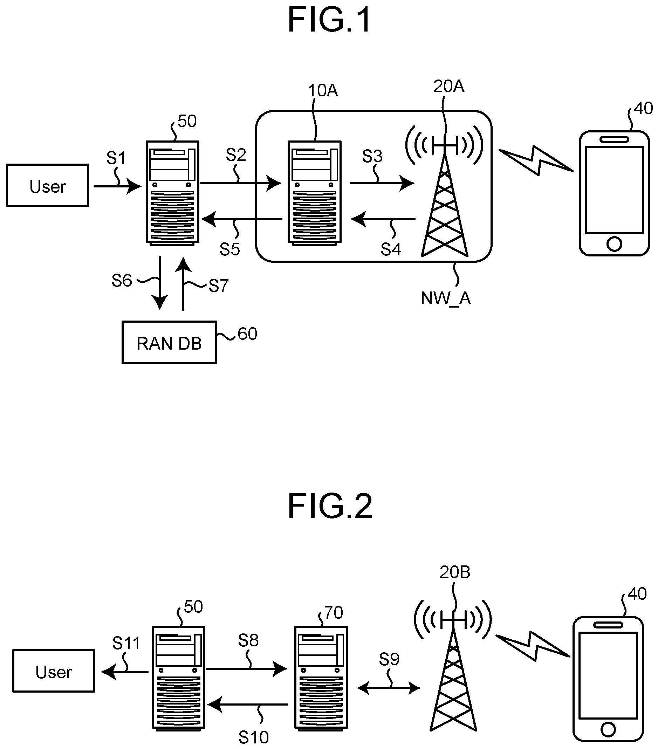

FIGS. 1 and 2 are diagrams for explaining an outline of information processing according to the first embodiment of the present disclosure. Here, information processing in which an application server 50 constructs a private network in response to an instruction of a user will be described.

The user is a service provider that provides a quality guarantee type communication service to a specific UE 40 or a specific application used by the UE 40.

As illustrated in FIG. 1, the application server 50 acquires, from the user, UE information regarding the UE 40 that receives provision of the communication service and quality guarantee information (an example of a request condition) regarding quality to be guaranteed (Step S1).

The UE information is, for example, identification information of the UE used to specify the UE 40. Examples of the UE information include the following information:
- international mobile subscriber identity (IMSI);
- media access control (MAC) address;
- internet protocol (IP) address;
- subscription permanent identifier (SUPI);
- generic public subscription identifier(GPSI); and
- permanent equipment identifier (PEI).

The quality guarantee information is information indicating quality of a communication service, such as a maximum bit rate (MBR), a guaranteed bit rate (GBR) throughput, a delay time, quality of experience (QoE), and allocation and retention priority (ARP). The user guarantees a communication service satisfying (guaranteeing) communication quality defined in the quality guarantee information to the UE 40 or in an application used by the UE 40.

Next, the application server 50 requests a located area (for example, location information) of the UE 40, for example, from a core network 10A of a wireless network NW_A to which the UE 40 is connected (Step S2). The application server 50 requests the location information of the UE, for example, by notifying the wireless network NW_A of the UE information acquired from the user.

Here, the wireless network NW_A is a network different from a private network constructed for providing a communication service by a user. The wireless network NW_A may be an operator network operated by an operator. The wireless network NW_A may be, for example, a local area network (LAN), a wide area network (WAN), or a cellular network.

The wireless network NW_A illustrated in FIG. 1 is, for example, a cellular network including the core network 10A and a base station 20A. The core network 10A communicates with the UE 40 via the base station 20A.

The core network 10A that has received an acquisition request of location information requests the base station 20A to acquire location information of the UE 40 (Step S3). The base station 20A that has received the acquisition request notifies the core network 10A of the location information acquired from the UE 40, for example (Step S4). The location information is information that can specify the location of the UE 40, such as latitude/longitude, tracking area identity (TAI), and tracking area code (TAC).

The core network 10A that has acquired the location information of the UE 40 from the base station 20A notifies the application server 50 of the acquired location information of the UE 40 (Step S5).

When acquiring the location information, the application server 50 requests whether or not a private network can be constructed and capability of a usable base station 20B (not illustrated) using the location information and the quality guarantee information of the UE 40 from a radio access network data base (RAN DB) device 60 (Step S6).

The RAN DB device 60 holds information regarding a wireless network that can be constructed. The RAN DB device 60 manages and holds capability of one or more base stations 20B. For example, the RAN DB device 60 holds base station information regarding a usable base station 20. The base station information can include, for example, information regarding a frequency band that can be used by the base station 20 and information regarding a communication state of the base station 20.

The RAN DB device 60 notifies the application server 50 of the capability of the usable base station 20B on the basis of the location information and the quality guarantee information of the UE 40 (Step S7).

As illustrated in FIG. 2, when acquiring the capability of the base station 20B, the application server 50 notifies a cloud server 70 (an example of another information processing device) of a private network construction request (Step S8).

The cloud server 70 is an information processing device that can generate a core network instance. The private network requested to be constructed by the application server 50 includes the base station 20B determined on the basis of the location information and the quality guarantee information of the UE 40 and a core network instance.

The cloud server 70 generates an instance of a core network on a cloud service in response to the construction request, and is connected to the base station 20B (Step S9). As a result, the core network constructed on the cloud service provides a private network service to the UE 40 via the base station 20B.

When constructing the core network of the private network, the cloud server 70 transmits a construction completion notification to the application server 50 (Step S10). The application server 50 notifies a user of the construction completion of the private network (Step S11).

Note that, in Steps S6 and S7, it is assumed that the application server 50 cannot acquire capability information of the base station 20B from the RAN DB device 60. In this case, the application server 50 may acquire the capability information of the base station 20B from the base station 20B via the core network in Steps S9 and S10.

As described above, in the information processing according to the present embodiment, the application server 50 transmits a private network construction request to the cloud server 70. The application server 50 requests the cloud server 70 to construct a private network including the base station 20 determined on the basis of the location information of the UE 40 to which a service is provided and the quality guarantee information of the UE 40 and a core network instance that serves the base station 20.

The cloud server 70 receives the construction request from the application server 50, and generates the core network instance on the cloud. The generated core network is connected to the base station 20, whereby a private network is constructed.

As a result, the application server 50 can more easily construct a quality guarantee type private network. The user can set a quality guarantee type communication service for a specific UE 40 or a specific application via a network line.

### [Infrastructure sharing]

The base station 20B included in the private network constructed by the application server 50 may be a device installed by a construction service provider that provides a private network construction service. Alternatively, the base station 20B may be a base station shared by a plurality of core networks by infrastructure sharing.

The infrastructure sharing is classified into several forms depending on which infrastructure is shared.

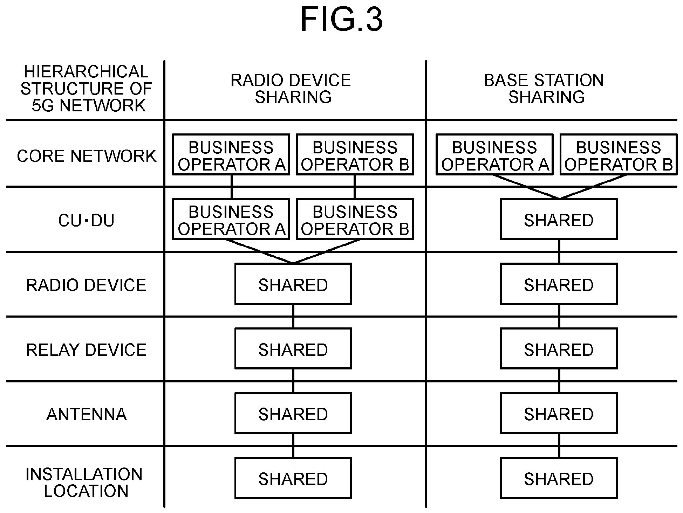

FIG. 3 is a diagram illustrating an example of the infrastructure sharing. At least a part of the base station 20 according to the present embodiment is shared by a plurality of business operators A and B by radio device sharing or base station sharing.

As illustrated in FIG. 3, the base station 20 includes a central unit (CU)/distributed unit (DU), a radio device, a relay device, and an antenna, and is installed at a predetermined installation place.

In a case of radio device sharing, an installation place, an antenna, a relay device, and a radio device are shared by the business operators A and **B.** In this case, each of the business operators A and B prepares the CU/DU and a core network to construct its own 5G network.

In a case of base station sharing, the installation location, the antenna, the relay device, the radio device, and the CU/DU are shared by the business operators A and B. In this case, each of the business operators A and B prepares a core network to construct its own 5G network.

The infrastructure sharing includes sharing forms other than the radio device sharing and the base station sharing. For example, the infrastructure sharing may include site sharing for sharing an installation place of the base station 20, antenna sharing for sharing an installation place and an antenna, and relay device sharing for sharing an installation place, an antenna, and a relay device.

Furthermore or alternatively, the infrastructure sharing may include Network Sharing defined in 3GPP (registered trademark) Technical Standard (TS) 23.501. The Network Sharing enables a plurality of operators to share a resource of one Shared Network. The shared resource here includes a radio resource. In Network Sharing in TS23.501, a 5G multi-operator core network (5G MOCN) that shares a Shared RAN (e.g., base station 20) is defined. The 5G MOCN supports the following scenarios with non-public network (NPN). That is, the base station 20 is supported by any combination of public land mobile networks (PLMNs), public network integrated non-public networks) (PNI-NPNs), and stand-alone non-public networks (SNPNs).

Here, it is assumed that the application server 50 according to the present embodiment constructs a private network by base station sharing. In this case, the application server 50 shares, for example, an installation location, an antenna, a relay device, a radio device, and a CU/DU with another business operator, and constructs a core network on the cloud.

Alternatively, it is assumed that the application server 50 according to the present embodiment constructs a private network by radio device sharing. In this case, the application server 50 may share an installation location, an antenna, a relay device, and a radio device with another business operator, and construct a CU/DU on the cloud in addition to a core network instance.

Note that, in the following description, it is assumed that the base station 20B is a base station (sharing base station) shared by radio device sharing or base station sharing unless otherwise specified. In addition, the radio device sharing and the base station sharing are also collectively referred to as RAN sharing.

The sharing base station may be individually installed as a base station, or may be installed by being mounted on public equipment such as a traffic light or a manhole.

### <1.3. Device configuration example>

### <1.3.1. Application server>

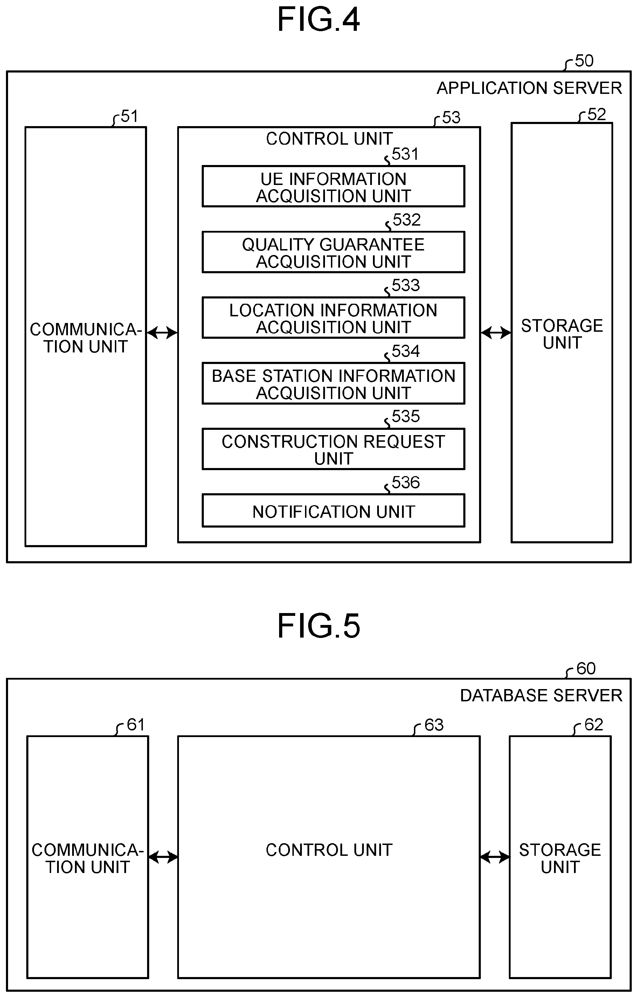

FIG. 4 is a block diagram illustrating a configuration example of the application server 50 according to the first embodiment of the present disclosure.

The application server 50 is a server device that functions as a private network application function (AF). The application server 50 is an information processing device that performs a quality guarantee type private network construction service for a user who provides a communication service that guarantees quality to the UE 40. The application server 50 may be a device collectively referred to as a cloud server or an edge server.

As illustrated in FIG. 4, the application server 50 includes a communication unit 51, a storage unit 52, and a control unit 53. Note that the configuration illustrated in FIG. 4 is a functional configuration, and a hardware configuration may be different from the configuration illustrated in FIG. 4. In addition, functions of the application server 50 may be implemented in a distributed manner in a plurality of physically separated configurations. For example, the application server 50 may include a plurality of server devices.

### [Communication unit 51]

The communication unit 51 is a communication interface for communicating with another device. The communication unit 51 may be a network interface or a device connection interface. For example, the communication unit 51 may be a local area network (LAN) interface such as a network interface card (NIC), or may be a USB interface including a universal serial bus (USB) host controller, a USB port, and the like. In addition, the communication unit 51 may be a wired interface or a wireless interface. The communication unit 51 functions as a communication means of the application server 50. The communication unit 51 communicates with the RAN DB device 60, the cloud server 70, and the like under control of the control unit 53.

### [Storage unit 52]

The storage unit 52 is a data readable/writable storage device such as a dynamic random access memory (DRAM), a static random access memory (SRAM), a flash memory, or a hard disk. The storage unit 52 functions as a storage means of the application server 50.

### [Control unit 53]

The control unit 53 is a controller that controls each unit of the application server 50. The control unit 53 is implemented by, for example, a processor such as a central processing unit (CPU), a micro processing unit (MPU), or a graphics processing unit (GPU). For example, the control unit 53 is implemented by a processor executing various programs stored in a storage device inside the application server 50 using a random access memory (RAM) or the like as a work area. Note that the control unit 53 may be implemented by an integrated circuit such as an application specific integrated circuit (ASIC) or a field programmable gate array (FPGA). Any of the CPU, the MPU, the GPU, the ASIC, and the FPGA can be regarded as a controller.

As illustrated in FIG. 4, the control unit 53 includes a UE information acquisition unit 531, a quality guarantee acquisition unit 532, a location information acquisition unit 533, a base station information acquisition unit 534, a construction request unit 535, and a notification unit 536. Each of the blocks (the UE information acquisition unit 531 to the notification unit 536) constituting the control unit 53 is a functional block indicating a function of the control unit 53. These functional blocks may be software blocks or hardware blocks. For example, each of the functional blocks described above may be one software module implemented by software (including a microprogram), or may be one circuit block on a semiconductor chip (die). Of course, each of the functional blocks may be one processor or one integrated circuit. A method for constituting the functional blocks is arbitrary. Note that the control unit 53 may be constituted by a functional unit different from the above-described functional blocks.

### (UE information acquisition unit 531)

The UE information acquisition unit 531 acquires UE information from a user. For example, the UE information acquisition unit 531 acquires the UE information via an information processing device (not illustrated) used by the user.

The UE information is, for example, an identifier for identifying the UE 40. The UE information may include, for example, at least one of IMSI, MAC address, IP address, SUPI, GPSI, and PEI, or may include another identifier for identifying the UE 40.

The UE information acquisition unit 531 outputs the acquired UE information to the location information acquisition unit 533.

### (Quality guarantee acquisition unit 532)

The quality guarantee acquisition unit 532 acquires quality guarantee information from the user. For example, the quality guarantee acquisition unit 532 acquires the UE information via an information processing device (not illustrated) used by the user.

The quality guarantee information may include, for example, at least one of MBR, GBR throughput, delay time, QoE, and priority, or may include other information for guaranteeing communication quality.

The quality guarantee acquisition unit 532 outputs the acquired quality guarantee information to the base station information acquisition unit 534.

### (Location information acquisition unit 533)

The location information acquisition unit 533 acquires location information of the UE 40 specified by the UE information. The location information acquisition unit 533 acquires the location information of the UE 40 from the wireless network NW_A.

The UE location information may include, for example, at least one of latitude/longitude, tracking area identity (TAI), and tracking area code (TAC), or may include other information indicating the location of the UE 40. The latitude/longitude is, for example, information measured by the UE 40 using a global navigation satellite system (GNSS) receiver represented by a global positioning system (GPS). In this case, the location information acquisition unit 533 acquires the location information from the UE 40 via the wireless network NW_A.

Alternatively, the UE location information may be information that can specify a combination location of a PLMN to which the UE 40 can be connected and a RAN ID (Cell ID), or may be other information that specifies the location of the UE.

In addition, the location information acquisition unit 533 may acquire communication information from the wireless network NW_A in addition to the location information. The communication information includes, for example, information regarding a PLMN detected at the location of the UE 40, a frequency, and radio quality (for example, radio wave intensity).

Note that, for example, when the user has acquired the location information of the UE 40, the location information acquisition unit 533 may acquire the location information of the UE 40 from the user. Alternatively, the location information acquisition unit 533 may directly acquire the location information from the UE 40 without going through the wireless network NW_A. In this case, the location information acquisition unit 533 directly receives the location information from the UE 40 at an application layer.

The location information acquisition unit 533 outputs the acquired location information to the base station information acquisition unit 534.

### (Base station information acquisition unit 534)

The base station information acquisition unit 534 requests, for example, construction information indicating whether or not a private network can be constructed at the location of the UE 40 and base station information regarding the base station 20 to be used from the RAN DB device 60.

For example, when a shared frequency is used, the base station information acquisition unit 534 inquires of the RAN DB device 60 about availability of the shared frequency. In addition, when the shared frequency is not used, that is, when a dedicated frequency is used, the base station information acquisition unit 534 inquires whether or not the private network has a license to use the dedicated frequency at the location of the UE 40.

Note that, for example, the license to use the dedicated frequency only needs to be possessed by an operator who operates the base station 20B, and does not have to be possessed by the user or a provider who provides a private network construction service. That is, when the base station 20B is a sharing base station, the license only needs to be possessed by an operator who operates the sharing base station.

For example, the base station information acquisition unit 534 notifies the RAN DB device 60 of information regarding 5QI desired to be used and a communication speed for which a bandwidth is desired to be guaranteed in a downlink (DL) and/or an uplink (UL) on the basis of the quality guarantee information.

The base station information acquisition unit 534 acquires, from the RAN DB device 60, construction information regarding whether or not a private network can be constructed and base station information regarding the base station 20B on the basis of the location information of the UE 40 and the quality guarantee information of the UE.

The construction information is information indicating whether or not a private network capable of guaranteeing desired quality can be constructed at the location of the UE 40. For example, when the RAN DB device 60 notifies the base station information acquisition unit 534 of the base station information regarding the base station 20B, the base station information acquisition unit 534 may determine that construction information indicating that the private network can be constructed has been acquired.

The base station information includes information regarding the base station 20B that can be used for a private network service capable of guaranteeing desired quality at the location of the UE 40. For example, the base station information includes capability information of the base station 20B.

The capability information includes, for example, identification information of the base station 20B. The identification information of the base station 20B may include at least one of gNB-DU ID, gNB-CU ID, gNB ID, and cell ID (e.g., Cell Global ID or Physical Cell ID) served by the base station 20B.

In addition, the capability information includes, for example, at least one of the following pieces of information and the like:
· frequency information regarding availability of a shared frequency;
· license Information regarding presence or absence of a license of a dedicated frequency;
· 5G QoS identifier (5QI) information;
· bandwidth information;
· throughput theoretical value information;
· throughput effective value information;
· congestion information regarding a congestion situation;
· Use ratio information regarding a use ratio of a computing resource; and
· broadcast information (e.g., master information block or system information block(e.g., SIB1 or SIB2)) transmitted from the base station 20B.

The 5QI information is information regarding 5QI supported by the base station 20B. The license information is information regarding presence or absence of a license of a dedicated frequency to be used in a private network at the location of the UE 40.

The bandwidth information is information regarding a maximum frequency bandwidth that can be simultaneously used by the base station 20B. The throughput theoretical value information is information regarding a theoretical value of a DL and/or UL throughput of the base station 20. The throughput effective value information is information regarding an effective value of a DL and/or UL throughput determined depending on a current parameter of the RAN in the base station 20B.

The congestion information regarding a congestion situation is information regarding a congestion situation of a radio resource provided by the base station 20B. The use ratio information is information regarding a use ratio of a computing resource of each of the RAN including the base station 20B, the core network, and the application server 50.

The base station information acquisition unit 534 outputs the acquired base station information to the construction request unit 535.

### (Construction request unit 535)

The construction request unit 535 transmits a private network construction request to the cloud server 70 on the basis of the base station information.

The construction request includes at least the following information:
· identification information of the UE 40;
· location information of the UE 40;
· identification information of the application server 50;
· identification information of RAN including the base station 20B or the base station 20B;
· capability information of the base station 20B;
· sharing information regarding sharing of the base station 20B; and
· core network template information.

The sharing information includes information regarding sharing of a plurality of components constituting the base station 20B. For example, the sharing information includes information indicating whether a sharing form of the base station 20B is radio device sharing or base station sharing. Furthermore or alternatively, the sharing information may include an identifier of a network (e.g., PLMN, PNI-NPN, or SNPN) that shares the base station 20B.

The core network template information includes, for example, information regarding a network function of a core network and information for constructing the network function. Furthermore or alternatively, the core network template information may include information regarding 5G MOCN (e.g., an identifier of 5G MOCN).

### (Notification unit 536)

The notification unit 536 acquires a private network construction completion notification from the cloud server 70. When acquiring the construction completion notification, the notification unit 536 notifies the user of construction completion of the private network. Thereafter, a quality guarantee type communication service by the private network is provided to the UE 40.

### <1.3.2. RAN DB device>

FIG. 5 is a diagram illustrating a configuration example of the RAN DB device 60 according to the first embodiment of the present disclosure.

The RAN DB device 60 is a database device (an example of a management device) that manages and holds information regarding the base station 20B, for example, a sharing base station. The RAN DB device 60 can be prepared by, for example, an infrastructure sharing equipment provider.

Alternatively, the RAN DB device 60 may be a DB device in which information of the private network, contract information of a service level agreement (SLA), and the like are collected.

The RAN DB device 60 is, for example, a cloud server disposed on the cloud. The application server 50 accesses the RAN DB device 60 via, for example, a network (not illustrated).

As illustrated in FIG. 5, the RAN DB device 60 includes a communication unit 61, a storage unit 62, and a control unit 63. Note that the configuration illustrated in FIG. 5 is a functional configuration, and a hardware configuration may be different from the configuration illustrated in FIG. 5. In addition, functions of the RAN DB device 60 may be implemented in a distributed manner in a plurality of physically separated configurations. For example, the RAN DB device 60 may include a plurality of server devices. Furthermore or alternatively, the functions of the RAN DB device 60 may be implemented by another node (for example, the application server 50 or the cloud server 70).

### [Communication unit 61]

The communication unit 61 is a communication interface for communicating with another device. The communication unit 61 may be a network interface or a device connection interface. For example, the communication unit 61 may be a local area network (LAN) interface such as a network interface card (NIC), or may be a USB interface including a universal serial bus (USB) host controller, a USB port, and the like. In addition, the communication unit 61 may be a wired interface or a wireless interface. The communication unit 61 functions as a communication means of the RAN DB device 60. The communication unit 61 communicates with the application server 50 and the like under control of the control unit 63.

### [Storage unit 62]

The storage unit 62 is a data readable/writable storage device such as a dynamic random access memory (DRAM), a static random access memory (SRAM), a flash memory, or a hard disk. The storage unit 62 functions as a storage means of the RAN DB device 60.

The storage unit 62 holds, for example, as base station information, at least one of radio device information regarding a radio device (e.g., a radio unit) of the base station 20B, capability information regarding capability of the base station 20, and state information regarding a state of the base station 20B.

The radio device information includes, for example, at least one of the following pieces of information:
· antenna location information regarding the location of an antenna included in the base station 20;
· antenna angle information regarding an installation angle (radiation angle) of the antenna included in the base station 20;
· information regarding the number of antenna elements, the number of polarization directions, and the like in the antenna included in the base station 20;
· frequency information regarding a frequency band and a bandwidth that can be used by the base station 20;
· type information regarding the type of frequency; and
· strength information regarding signal strength.

The type information includes, for example, information indicating whether the frequency is a frequency of a public network or a frequency of a private network. The strength information includes, for example, information of signal strength according to a positional relationship between the antenna and the UE 40.

The frequency information may include information regarding presence or absence of a frequency license and information regarding availability in a case of a shared frequency.

The capability information includes, for example, at least one of the following pieces of information:
· 5QI information regarding 5QI supported by the base station 20B;
· bandwidth information regarding a maximum frequency bandwidth that can be simultaneously used by the base station 20B;
· throughput theoretical value information regarding a theoretical value of a DL and/or UL throughput of the base station 20B; and
· broadcast information (e.g., master information block or system information block(e.g., SIB1 or SIB2)) transmitted from the base station 20B.

The throughput theoretical value information can include, for example, information regarding availability of multi input multi output (MIMO), carrier aggregation (CA), or dual connectivity (DC).

The state information includes, for example, at least one of the following pieces of information:
· throughput effective value information regarding an effective value of a DL and/or UL throughput determined by a current parameter of the base station 20B;
· resource information regarding a usable radio resource in a maximum frequency bandwidth;
· connection information regarding wired connection between the base station 20B used in a private network and a core network; and
· computing information regarding a computing resource of the base station 20B used in a private network.

The usable radio resource in the maximum frequency bandwidth included in the resource information is a resource excluding an already used radio resource. This radio resource is calculated, for example, on the basis of information regarding a statistical radio resource occupancy. This radio resource is, for example, a resource amount obtained by subtracting an occupancy from the maximum frequency bandwidth.

The connection information includes information (for example, a communication speed or a use ratio) indicating the degree of congestion in a wired section between a core network and the base station 20B.

The state information of the base station 20B is managed by an orchestrator that manages a sharing base station. The orchestrator is, for example, a system that provides a function of managing maintenance and operation of a sharing base station, such as an operating support system (OSS) or an operation, administration and management (OAM).

The RAN DB device 60 acquires the state information from, for example, the orchestrator. Alternatively, the application server 50 may directly acquire information regarding the state information among pieces of the base station information from the orchestrator. In this case, the RAN DB device 60 holds radio device information and capability information other than the state information.

In addition, the application server 50 may directly acquire at least a part of the base station information from a sharing base station.

As described above, the application server 50 can acquire the base station information from a plurality of devices such as the RAN DB device 60, an orchestrator, and a sharing base station.

### [Control unit 63]

The control unit 63 is a controller that controls each unit of the RAN DB device 60. The control unit 63 is implemented by, for example, a processor such as a CPU, an MPU, or a GPU. For example, the control unit 63 is implemented by a processor executing various programs stored in a storage device inside the RAN DB device 60 using a RAM or the like as a work area. Note that the control unit 63 may be implemented by an integrated circuit such as an ASIC or an FPGA. Any of the CPU, the MPU, the GPU, the ASIC, and the FPGA can be regarded as a controller.

### <1.3.3. Cloud server>

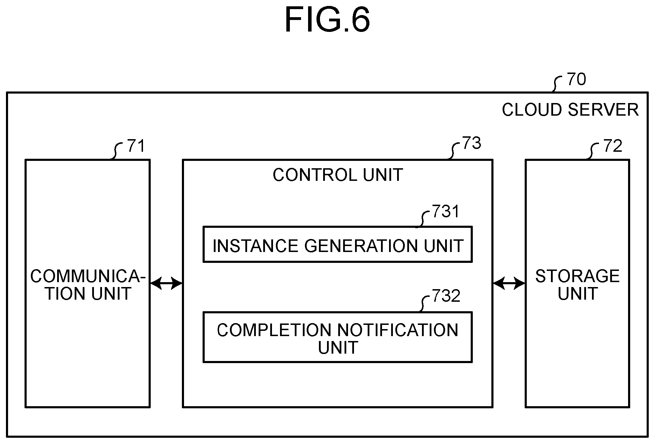

FIG. 6 is a block diagram illustrating a configuration example of the cloud server 70 according to the first embodiment of the present disclosure.

The cloud server 70 is an information processing device that receives a construction request of the application server 50 and generates a core network instance of a private network on the cloud.

As illustrated in FIG. 6, the cloud server 70 includes a communication unit 71, a storage unit 72, and a control unit 73. Note that the configuration illustrated in FIG. 6 is a functional configuration, and a hardware configuration may be different from the configuration illustrated in FIG. 6. In addition, functions of the cloud server 70 may be implemented in a distributed manner in a plurality of physically separated configurations. For example, the cloud server 70 may include a plurality of server devices.

### [Communication unit 71]

The communication unit 71 is a communication interface for communicating with another device. The communication unit 71 may be a network interface or a device connection interface. For example, the communication unit 71 may be a local area network (LAN) interface such as a network interface card (NIC), or may be a USB interface including a universal serial bus (USB) host controller, a USB port, and the like. In addition, the communication unit 71 may be a wired interface or a wireless interface. The communication unit 71 functions as a communication means of the cloud server 70. The communication unit 71 communicates with the application server 50 and the like under control of the control unit 73.

### [Storage unit 72]

The storage unit 72 is a data readable/writable storage device such as a dynamic random access memory (DRAM), a static random access memory (SRAM), a flash memory, or a hard disk. The storage unit 72 functions as a storage means of the cloud server 70

### [Control unit 73]

The control unit 73 is a controller that controls each unit of the cloud server 70. The control unit 73 is implemented by, for example, a processor such as a central processing unit (CPU), a micro processing unit (MPU), or a graphics processing unit (GPU). For example, the control unit 73 is implemented by a processor executing various programs stored in a storage device inside the cloud server 70 using a random access memory (RAM) or the like as a work area. Note that the control unit 73 may be implemented by an integrated circuit such as an application specific integrated circuit (ASIC) or a field programmable gate array (FPGA). Any of the CPU, the MPU, the GPU, the ASIC, and the FPGA can be regarded as a controller.

As illustrated in FIG. 6, the control unit 73 includes an instance generation unit 731 and a completion notification unit 732. Each of the blocks (the instance generation unit 731 and the completion notification unit 732) constituting the control unit 73 is a functional block indicating a function of the control unit 73. These functional blocks may be software blocks or hardware blocks. For example, each of the functional blocks described above may be one software module implemented by software (including a microprogram), or may be one circuit block on a semiconductor chip (die). Of course, each of the functional blocks may be one processor or one integrated circuit. A method for constituting the functional blocks is arbitrary. Note that the control unit 73 may be constituted by a functional unit different from the above-described functional blocks.

### (Instance generation unit 731)

When receiving a private network construction request from the application server 50, the instance generation unit 731 determines a region where each network function (NF) of a core network is generated.

For example, in addition to the location information and the carrier information acquired from the user, the instance generation unit 731 selects a location where the core network is started from among the locations of the base station 20B that can use a shared frequency.

For example, the instance generation unit 731 starts the core network in the same region as the application server 50.

Here, for example, the application server 50 is selected from among servers widely disposed in the whole world depending on the location of the user. For example, as the application server 50, a server device existing at the location of the user, in other words, in the vicinity of an information processing device used by the user is selected by region-based DNS routing.

The instance generation unit 731 generates a core network instance in the same region as the application server 50, in other words, in a cloud server in the vicinity of the location of the user. The cloud server in which the core network instance is generated may be the same device as the cloud server 70, or may be a device different from the cloud server 70.

Alternatively, the instance generation unit 731 may generate the core network instance in the vicinity of the location of the UE 40 on the basis of the location information of the UE 40.

Alternatively, the instance generation unit 731 may generate the core network instance in a data center in the vicinity of the location of the user and/or the UE 40.

Alternatively, the instance generation unit 731 may select an optimal data center from among data centers managed and operated by a plurality of cloud vendors, and generate the core network instance in the selected data center. For example, the instance generation unit 731 selects a data center closest to the location of the user and/or the UE 40 in terms of distance from among data centers of a plurality of cloud vendors. Alternatively, the instance generation unit 731 may select a data center in consideration of a usage fee or the like of each cloud vendor.

In addition, for example, when a private network is constructed using a network (for example, a cellular network) operated and managed by a telecommunications carrier, the instance generation unit 731 can generate the core network instance at an edge of the network.

The instance generation unit 731 ensures scalability designated by a core network template on the cloud. The core network template is included in the construction request acquired from the application server 50. The core network template includes, as scalability, for example, information such as the upper limit number of scales (computing resources) of each NF of the core network instance and the maximum number of UEs.

Alternatively, the instance generation unit 731 may generate an instance in a configuration that can extend a core network. That is, the instance generation unit 731 can generate an instance of the core network in a configuration capable of performing auto scaling.

Alternatively, the instance generation unit 731 may designate an upper limit of scalability in a profile of the instance. The instance generation unit 731 can limit scalability of each instance in consideration of, for example, cost such as a cloud usage fee or unauthorized use. In particular, a financial burden on the user can be reduced by limiting scalability depending on a billing method such as a metered rate of the cloud.

The cloud server 70 generates each NF of the core network on the cloud in response to the construction request from the application server 50.

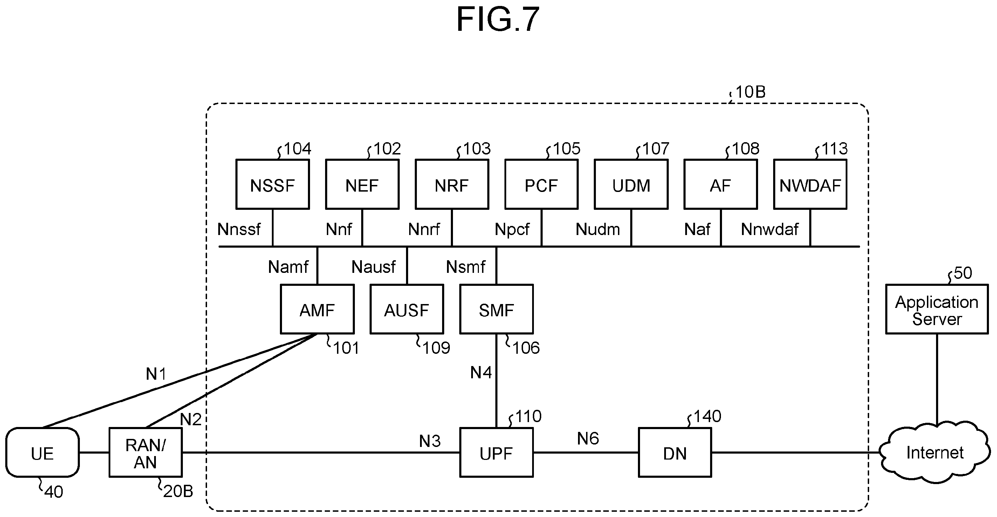

A configuration example of a network architecture of a private network will be described with reference to FIG. 7. Here, it is assumed that the private network is a network of a 5G system.

FIG. 7 is a diagram illustrating a configuration of the network architecture of the 5G system. Hereinafter, the 5G system is abbreviated as 5GS (5G system).

As illustrated in FIG. 7, the 5GS includes the UE 40, the (R)AN 20B, and a 5G core (5GC) 10B. Note that the 5GC 10B is also referred to as an NG core (NGC) or a core network. In addition, the notation of (R)AN represents the base station 20B including a radio access network (RAN) and an access network (AN).

By an application server (AS) 500 that processes an application being connected to the 5GS via the Internet, the UE 40 can use the application via a 5G service.

When an entity that provides an application, for example, a service provider has a contract such as SLA with a public land mobile network (PLMN) operator that provides the 5G service, the application server 50 is disposed in the 5GC 10B as a DN 140. Alternatively, the application server 50 and the DN 140 may be connected by a dedicated line or a virtual private network (VPN). Note that the application server 50 is also called a cloud server, and may be provided in a form of an edge server.

A control plane function group of the 5GS includes an access and mobility management function (AMF) 101, a network exposure function (NEF) 102, and a network repository function (NRF) 103. In addition, the control plane function group includes a network slice selection function (NSSF) 104, a policy control function (PCF) 105, a session management function (SMF) 106, and a unified data management (UDM) 107. The control plane function group includes an application function (AF) 108, an authentication server function (AUSF) 109, and an NWDAF 113. As described above, the control plane function group includes a plurality of network functions (NFs).

Here, the AF 108 can operate as an NF that processes a control plane of the application server 50.

The AF 308 may be installed in a physically identical device as an entity logically different from the application server 50, that is, in the application server 50. In addition, the AF 108 operates as an NF that processes a control plane for a 5GS application, and can be disposed in the 5GC 10B.

The UDM 107 includes a unified data repository (UDR) that holds and manages subscription information, and a front end (FE) unit that processes the subscription information. The AMF 101 performs mobility management. The SMF 106 performs session management.

The NSSF 104 has a function related to selection of a network slice. The NEF 102 has a function of providing capability or an event of a network function to a third party, the AF 108, or an edge computing function. The PCF 105 has a function of policy control. The AF 208 has a function of interacting with a core network to provide a service. The NWDAF 113 has a network data analysis function of a mobile network.

Namf is a service-based interface provided by the AMF 101. Nsmf is a service-based interface provided by the SMF 106. Nnef is a service-based interface provided by the NEF 102.

Npcf is a service-based interface provided by the PCF 105. Nudm is a service-based interface provided by the UDM 107. Naf is a service-based interface provided by the AF 108. Nnrf is a service-based interface provided by the NRF 103.

Nnssf is a service-based interface provided by the NSSF 104. Nausf is a service-based interface provided by the AUSF 109. Nnwdaf is a service-based interface provided by the NWDAF 113.

By making a request or subscription for a service provided by another network function, each NF can receive a response or a notification from the service. That is, each NF exchanges information with another NF by means of request/response or subscription/notification via each service-based interface.

A user plane function (UPF) 130 has a function of user plane processing. The data network (DN) 140 has a function of enabling connection to a service unique to a mobile network operator (MNO), the Internet, and a thirdparty service. The UPF 130 functions as a transfer processing unit of user plane data processed by the application server 50. The UPF 130 also functions as a gateway connected to the (R)AN 20B.

Here, the 5GS can configure each NF of the 5GC 10B by virtualization or a container and can install each NF in a cloud server. Furthermore, the 5GS can set each NF dynamically and in a re-configurable manner using a software defined network (SDN).

The (R)AN 20B has a function of enabling connection to the RAN and connection to an AN other than the RAN. The (R)AN 20B includes a base station called a gNB or an ng-eNB. The RAN may also be called a next generation (NG)-RAN.

In addition, the function of the (R)AN 20B is divided into a CU that processes L2/L3 functions of a packet data convergence protocol (PDCP) sublayer and higher, and a DU that processes L2/L1 functions of a radio link control (RLC) sublayer and lower. The function of the (R)AN 20 can be located in a distributed manner via an F1 interface.

Furthermore, a function of the DU is divided into a radio unit (RU) that processes a LOW PHY sublayer and a radio unit (radio), and a DU that processes sublayers of RLC, medium access control (MAC), and HIGH PHY. The function of the DU can be located in a distributed manner, for example, via a fronthaul conforming to an evolved common public radio interface (eCPRI).

Here, the 5GS can configure functions of the CU and/or the DU by virtualization or a container and can install the functions in a cloud server. Furthermore, the 5GS can set the functions of the CU and/or the DU dynamically and in a re-configurable manner using the SDN.

The UE 40 and the AMF 101 mutually exchange information via a reference point N1. The (R)AN 20 and the AMF 101 mutually exchange information via a reference point N2. The SMF 106 and the UPF 130 mutually exchange information via a reference point N4.

Returning to FIG. 6, the instance generation unit 731 generates each NF of the core network 10B.

For example, the instance generation unit 731 generates the NEF 102 and the NRF 103 in a data center on the cloud. Note that, when the NEF 102 and the NRF 103 are set as entry points of the application server 50, the NEF 102 and the NRF 103 have already been generated. In this case, the instance generation unit 731 can omit generation of the NEF 102 and the NRF 103.

The instance generation unit 731 generates the UDM 107 and the AUSF 109 in the data center on the cloud depending on use and capacity. The instance generation unit 731 is connected to a generated master UDR or generates a replica UDR.

The instance generation unit 731 may generate the NEF 102, the NRF 103, the UDM 107, the AUSF 109, and the UDR in advance (for example, before receiving the construction request).

The instance generation unit 731 generates the AMF 101, for example, in a data center of a region whose distance to the base station 20 is a physical distance that satisfies a low latency request.

The instance generation unit 731 generates the SMF 106. When the quality guarantee (bandwidth guarantee) of which the application server 50 has given a notification is performed not in a unit of the UE 40 but in a unit of quality of service (QoS) flow, the instance generation unit 731 may generate a flow description from an IP address of the application server 50 and an IP address and a port number of the UE 40, and set a packet detection rule (PDR) or a user reporting rule (URR) in the UPF 130.

The instance generation unit 731 generates the PCF 105. The instance generation unit 731 generates a QoS data set as QoS setting. The QoS data set may include at least one of 5QI set on the basis of the information of quality guarantee (bandwidth guarantee) of which the application server 50 has given a notification, an MBR and a GBR of UL and/or DL, a priority level of UL and/or DL, and an averaging window.

The instance generation unit 731 generates the NSSF 104 depending on use and capacity. The instance generation unit 731 generates the NWDAF 113. After the generation, the NWDAF 113 may start to subscribe to an exposure function provided by each NF, start data collection, and start data analysis. In addition, the NWDAF 113 may access the UPF 130 via the SMF 106 in order to collect a traffic amount of the UPF 130.

The instance generation unit 731 generates the UPF 130. After the generation, the UPF 130 receives setting of the PDR and the URR from the SMF 106, and receives a collection request for the traffic amount from the NWDAF 113. When receiving these, the SMF 106 executes traffic counting. In addition, the SMF 106 may notify the SMF 106 or the NWDAF 113 of information regarding the counted traffic as necessary.

Note that the NF generated by the instance generation unit 731 is an example, and the instance generation unit 731 may generate an NF other than those described above. In addition, the instance generation unit 731 may omit the generation of the above-described NF.

### (Completion notification unit 732)

The completion notification unit 732 notifies the application server 50 of completion of the instance generation of the core network 10B by the instance generation unit 731. The completion notification unit 732 notifies the application server 50 of the construction completion notification.

The construction completion notification includes at least one of the following pieces of information:
· a private network construction result;
· a retention policy;
· a transaction ID;
· entry point information; and
· connection information for the UE 40.

The private network construction result is information indicating whether construction of a private network has succeeded or failed. The retention policy is information indicating a lifetime of the generated core network 10B, that is, how long the core network 10B can be used.

The entry point information includes, for example, a uniform resource identifier (URI) of the NEF 102 and/or the NRF 103. The connection information for the UE 40 includes, for example, information regarding a data network name (DNN).

### <1.3.4. Base station>

Next, the base station 20 will be described. The base station 20 is a communication device that operates a cell and provides a wireless communication service to one or more UEs 40 located inside a coverage of the cell. The cell is operated according to any wireless communication system such as LTE or NR. The base station 20 is connected to a core network. The core network is connected to a packet data network via a gateway device. In addition, the base station 20 operates a beam identifiable by synchronization signal/PBCH block (SSB), and transmits and receives data to and from one or more UEs 40 via one or more beams.

Note that the base station 20 may include an assembly of a plurality of physical or logical devices. For example, the base station 20 in the present embodiment may be divided into a plurality of devices of a baseband unit (BBU), a radio unit (RU), and an antenna, and may be interpreted as an assembly of the plurality of devices. Furthermore or alternatively, the base station 20 in the embodiment of the present disclosure may be at least one of the BBU, the RU, and the antenna. The BBU, the RU, and the antenna may be connected by a predetermined interface (for example, eCPRI). Furthermore or alternatively, the RU may be referred to as a remote radio unit (RRU) or a radio dot (RD). The BBU may correspond to a combination of a gNB-CU and a gNB-DU described later. Furthermore or alternatively, the RU may be a device integrally formed with an antenna. An antenna (for example, an antenna integrally formed with the RU) included in the base station 20 may adopt an advanced antenna system and support MIMO (for example, FD-MIMO) or beamforming. In the advanced antenna system, an antenna (for example, an antenna integrally formed with the RU) included in the base station 20 may include, for example, 64 transmission antenna ports and 64 reception antenna ports.

In addition, a plurality of the base stations 20 may be connected to each other. One or more base stations 20 may be included in a radio access network (RAN). That is, the base station 20 may be simply referred to as a RAN, a RAN node, an access network (AN), or an AN node. A RAN in LTE is called an enhanced universal terrestrial RAN (EUTRAN). A RAN in NR is called NGRAN. A RAN in W-CDMA (UMTS) is called UTRAN. The base station 20 of LTE is referred to as an evolved node B (eNodeB) or an eNB. That is, the EUTRAN includes one or more eNodeBs (eNBs). In addition, the base station 20 of NR is referred to as a gNodeB or a gNB. That is, the NGRAN includes one or more gNBs. Furthermore, the EUTRAN may include a gNB (en-gNB) connected to a core network (EPC) in an LTE communication system (EPS). Similarly, the NGRAN may include an ng-eNB connected to a core network 5GC in a 5G communications system (5GS). Furthermore or alternatively, when the base station 20 is an eNB, a gNB, or the like, the base station 20 may be referred to as 3GPP Access. Furthermore or alternatively, when the base station 20 is a wireless access point **(e.g.,** WiFi (registered trademark) access point), the base station 20 may be referred to as Non-3GPP Access. Furthermore or alternatively, the base station 20 may be an optical extension device called a remote radio head (RRH). Furthermore or alternatively, when the base station 20 is a gNB, the base station 20 may be referred to as a combination of the above-described gNB central unit (CU) and gNB distributed unit (DU) or either of them. The gNB central unit (CU) hosts a plurality of upper layers (for example, RRC, SDAP, and PDCP) of Access Stratum for communication with the UE. On the other hand, the gNB-DU hosts a plurality of lower layers (for example, RLC, MAC, and PHY) of Access Stratum. That is, among messages and pieces of information described later, RRC signalling (for example, various SIBs including a MIB and a SIB1, an RRCSetup message, and an RRCReconfiguration message) may be generated by the gNB CU, while DCI and various physical channels (for example, PDCCH and PBCH) described later may be generated by the gNB-DU. Alternatively, in the RRC signalling, for example, some configurations (setting information) such as IE: cellGroupConfig may be generated by the gNB-DU, and the remaining configurations may be generated by the gNB-CU. These configurations (setting information) may be transmitted and received to and from an F1 interface described later. The base station 20 may be configured to be able to communicate with another base station 20. For example, when the plurality of base stations 20 are eNBs or a combination of an eNB and an en-gNB, the base stations 20 may be connected to each other by an X2 interface. Furthermore or alternatively, when the plurality of base stations 20 are gNBs or a combination of a gn-eNB and a gNB, the devices may be connected to each other by an Xn interface. Furthermore or alternatively, when the plurality of base stations 20 is a combination of a gNB central unit (CU) and a gNB distributed unit (DU), the devices may be connected to each other by the above-described F1 interface. A message/information (RRC signalling or DCI information and physical channel) described later may be communicated (for example, via the X2, the Xn, or the F1 interface) among the plurality of base stations 20.

Furthermore, as described above, the base station 20 may be configured to manage a plurality of cells. A cell provided by the base station 20 is called a serving cell. The serving cell includes a primary cell (PCell) and a secondary cell (SCell). When a dual connectivity (for example, a EUTRA-EUTRA dual connectivity, a EUTRA-NR dual connectivity (ENDC), a EUTRA-NR dual connectivity with 5GC, an NR-EUTRA dual connectivity (NEDC), or an NR-NR dual connectivity) is provided to the UE 40, a PCell and zero or one or more SCell(s) provided by a master node (MN) are called a Master Cell Group. Furthermore, the serving cell may include a primary secondary cell or primary SCG cell (PSCell). That is, when the dual connectivity is provided to the UE, a PSCell and zero or one or more SCell(s) provided by a secondary node (SN) are called a secondary cell group (SCG). Unless a special configuration (for example, PUCCH on SCell) is made, a physical uplink control channel (PUCCH) is transmitted in the PCell and the PSCell, but is not transmitted in the SCell. In addition, a radio link failure is also detected in the PCell and the PSCell, but is not detected in the SCell (does not have to be detected). As described above, the PCell and the PSCell have special roles in the serving cell(s), and therefore are also called a special cell (SpCell). One downlink component carrier and one uplink component carrier may be associated with one cell. In addition, a system bandwidth corresponding to one cell may be divided into a plurality of bandwidth parts. In this case, one or more bandwidth parts (BWPs) may be set for the UE, and one bandwidth part may be used for the UE as an active BWP. In addition, radio resources (for example, a frequency band, a numerology (subcarrier spacing), and a slot configuration) that can be used by the UE 40 may vary depending on a cell, a component carrier, or a BWP.

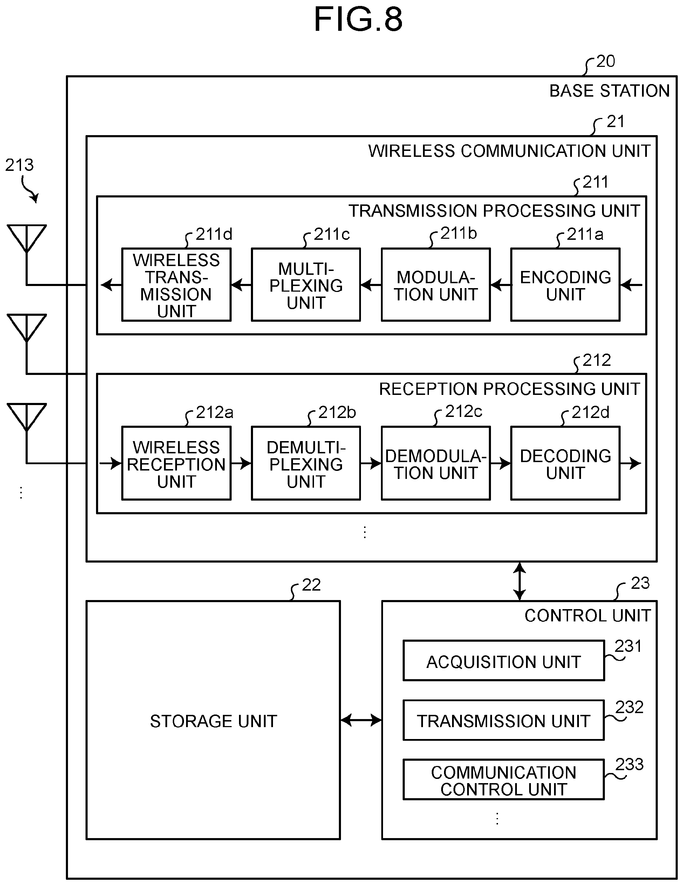

FIG. 8 is a diagram illustrating a configuration example of the base station 20 according to the first embodiment of the present disclosure. The base station 20 includes a wireless communication unit 21, a storage unit 22, and a control unit 23. Note that the configuration illustrated in FIG. 8 is a functional configuration, and a hardware configuration may be different from the configuration illustrated in FIG. 8. In addition, functions of the base station 20 may be implemented in a distributed manner in a plurality of physically separated configurations.

The wireless communication unit 21 is a signal processing unit for wirelessly communicating with another wireless communication device (for example, the UE 40). The wireless communication unit 21 operates under control of the control unit 23. The wireless communication unit 21 is compatible with one or more wireless access systems. For example, the wireless communication unit 21 is compatible with both NR and LTE. The wireless communication unit 21 may be compatible with W-CDMA and cdma2000 in addition to NR and LTE. In addition, the wireless communication unit 21 may be compatible with an automatic retransmission technique such as hybrid automatic repeat request (HARQ).

The wireless communication unit 21 includes a transmission processing unit 211, a reception processing unit 212, and an antenna 213. The wireless communication unit 21 may include a plurality of the transmission processing units 211, a plurality of the reception processing units 212, and a plurality of the antennas 213. Note that, when the wireless communication unit 21 is compatible with a plurality of wireless access systems, each unit of the wireless communication unit 21 can be configured individually for each wireless access system. For example, the transmission processing unit 211 and the reception processing unit 212 are individually configured for NR and LTE. In addition, the antenna 213 may include a plurality of antenna elements (for example, a plurality of patch antennas). In this case, the wireless communication unit 21 may be configured to be beamformable.

The transmission processing unit 211 performs transmission processing on downlink control information and downlink data. For example, the transmission processing unit 211 encodes downlink control information and downlink data input from the control unit 23 using an encoding system such as block encoding, convolutional encoding, or turbo encoding. Here, the encoding may be performed with a polar code or a low density parity check code (LDPC code). Then, the transmission processing unit 211 modulates an encoded bit by a predetermined modulation method such as BPSK, QPSK, 16QAM, 64QAM, or 256QAM. In this case, signal points on a constellation do not necessarily have to be equidistant. The constellation may be a non uniform constellation (NUC). Then, the transmission processing unit 211 multiplexes a modulation symbol of each channel and a downlink reference signal, and locates the multiplexed result in a predetermined resource element. Then, the transmission processing unit 211 performs various types of signal processing on the multiplexed signal. For example, the transmission processing unit 211 performs processing such as conversion into a frequency domain by fast Fourier transform, addition of a guard interval (cyclic prefix), generation of a baseband digital signal, conversion to an analog signal, quadrature modulation, upconversion, removal of an extra frequency component, and power amplification. A signal generated by the transmission processing unit 211 is transmitted from the antenna 213.

The reception processing unit 212 processes an uplink signal received via the antenna 213. For example, the reception processing unit 212 performs down-conversion, removal of an unnecessary frequency component, control of an amplification level, quadrature demodulation, conversion to a digital signal, removal of a guard interval (cyclic prefix), extraction of a frequency domain signal by fast Fourier transform, and the like on an uplink signal. Then, the reception processing unit 212 separates an uplink channel such as a physical uplink shared channel (PUSCH) or a physical uplink control channel (PUCCH) and an uplink reference signal from a signal on which these pieces of processing have been performed. In addition, the reception processing unit 212 demodulates a received signal using a modulation system such as binary phase shift keying (BPSK) or quadrature phase shift keying (QPSK) with respect to a modulation symbol of the uplink channel. The modulation system used for the demodulation may be 16 quadrature amplitude modulation (16QAM), 64QAM, or 256QAM. In this case, signal points on a constellation do not necessarily have to be equidistant. The constellation may be a non uniform constellation (NUC). Then, the reception processing unit 212 performs decoding processing on an encoded bit of the demodulated uplink channel. The decoded uplink data and uplink control information are output to the control unit 23.

The antenna 213 is an antenna device (antenna unit) that mutually converts a current and a radio wave. The antenna 213 may include one antenna element (for example, one patch antenna) or may include a plurality of antenna elements (for example, a plurality of patch antennas). When the antenna 213 includes a plurality of antenna elements, the wireless communication unit 21 may be configured to be beamformable. For example, the wireless communication unit 21 may be configured to generate a directional beam by controlling directivity of a wireless signal using a plurality of antenna elements. In addition, the wireless communication unit 21 may transmit and receive a spatially multiplexed signal via a plurality of layers including a plurality of antenna elements.

The storage unit 22 is a storage device capable of reading and writing data, such as a DRAM, an SRAM, a flash memory, or a hard disk. The storage unit 22 functions as a storage means of the base station 20.

The control unit 23 is a controller that controls each unit of the base station 20. The control unit 23 is implemented by, for example, a processor such as a CPU or an MPU. For example, the control unit 23 is implemented by a processor executing various programs stored in a storage device inside the base station 20 using a RAM or the like as a work area. Note that the control unit 23 may be implemented by an integrated circuit such as an ASIC or an FPGA. Any of the CPU, the MPU, the ASIC, and the FPGA can be regarded as a controller. In addition, the control unit 23 may be implemented by a GPU in addition to or instead of the CPU.

As illustrated in FIG. 8, the control unit 23 includes an acquisition unit 231, a transmission unit 232, and a communication control unit 233. Each of the blocks (the acquisition unit 231 to the communication control unit 233) constituting the control unit 23 is a functional block indicating a function of the control unit 23. These functional blocks may be software blocks or hardware blocks. For example, each of the functional blocks described above may be one software module implemented by software (including a microprogram), or may be one circuit block on a semiconductor chip (die). Of course, each of the functional blocks may be one processor or one integrated circuit. A method for constituting the functional blocks is arbitrary. Note that the control unit 23 may be constituted by a functional unit different from the above-described functional blocks. An operation of the control unit 23 may be the same as an operation of each of blocks of a control unit 43 of a terminal device 40.

### <1.3.5. UE>

Next, a configuration of the UE 40 (hereinafter, also referred to as terminal device 40) will be described.

The terminal device 40 is a wireless communication device that performs wireless communication with another communication device such as the base station 20. The terminal device 40 is, for example, a mobile phone, a smart device (a smartphone or a tablet), a personal digital assistant (PDA), or a personal computer. In addition, the terminal device 40 may be a device such as a business camera having a communication function, or may be a motorcycle, a moving relay vehicle, or the like on which a communication device such as a field pickup unit (FPU) is mounted. In addition, the terminal device 40 may be a machine to machine (M2M) device or an Internet of things (IoT) device.

Note that the terminal device 40 may be able to perform NOMA communication with the base station 20. In addition, the terminal device 40 may be able to use an automatic retransmission technique such as HARQ when communicating with the base station 20. In addition, the terminal device 40 may be able to perform sidelink communication with another terminal device 40. The terminal device 40 may also be able to use an automatic retransmission technique such as HARQ when performing sidelink communication. Note that the terminal device 40 may also be able to perform NOMA communication in communication (sidelink) with another terminal device 40. In addition, the terminal device 40 may be able to perform LPWA communication with another communication device (for example, the base station 20 and another terminal device 40). In addition, the wireless communication used by the terminal device 40 may be wireless communication using millimeter waves. Note that the wireless communication (including sidelink communication) used by the terminal device 40 may be wireless communication using radio waves or wireless communication (optical wireless) using infrared rays or visible light.

In addition, the terminal device 40 may be a mobile body device. The mobile body device is a mobile wireless communication device. At this time, the terminal device 40 may be a wireless communication device installed in a mobile body or may be a mobile body itself. For example, the terminal device 40 may be a vehicle that moves on a road, such as an automobile, a bus, a truck, or a motorcycle, a vehicle that moves on a rail disposed on a track, such as a train, or a wireless communication device mounted on the vehicle. Note that the mobile body may be a mobile terminal, or may be a mobile body that moves on land (on the ground in a narrow sense), in the ground, on water, or under water. In addition, the mobile body may be a mobile body that moves inside the atmosphere, such as a drone or a helicopter, or may be a mobile body that moves outside the atmosphere, such as an artificial satellite.

The terminal device 40 may perform communication by being simultaneously connected to a plurality of base stations or a plurality of cells. For example, when one base station supports a communication area via a plurality of cells (for example, pCell and sCell), the plurality of cells can be bundled, and the base station 20 and the terminal device 40 can communicate with each other by a CA technique or a DC technique. Alternatively, via cells of different base stations 20, the terminal device 40 and the plurality of base stations 20 can communicate with each other by a coordinated multi-point transmission and reception (CoMP) technique.

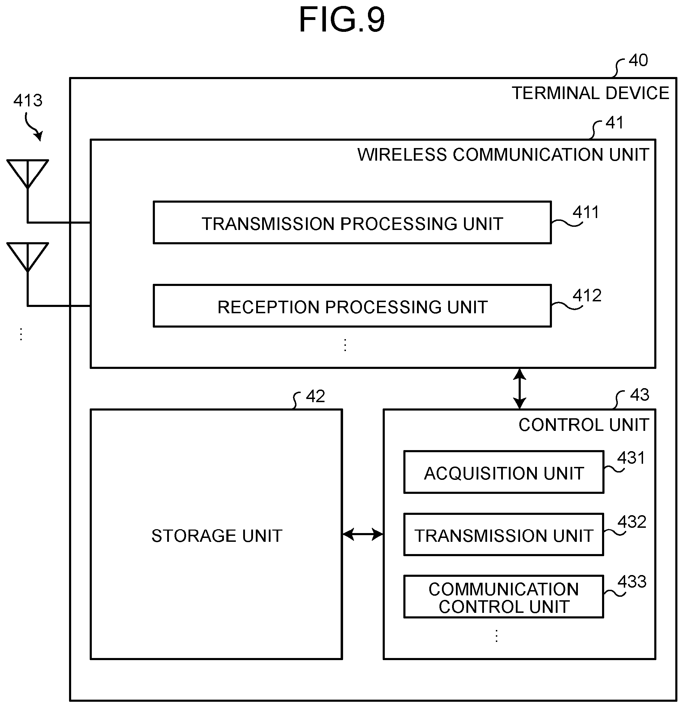

FIG. 9 is a diagram illustrating a configuration example of the terminal device 40 according to the first embodiment of the present disclosure. The terminal device 40 includes a wireless communication unit 41, a storage unit 42, and a control unit 43. Note that the configuration illustrated in FIG. 9 is a functional configuration, and a hardware configuration may be different from the configuration illustrated in FIG. 9. In addition, functions of the terminal device 40 may be implemented in a distributed manner in a plurality of physically separated configurations.

The wireless communication unit 41 is a signal processing unit for wirelessly communicating with another wireless communication device (for example, the base station 20). The wireless communication unit 41 operates under control of the control unit 43. The wireless communication unit 41 includes a transmission processing unit 411, a reception processing unit 412, and an antenna 413. Configurations of the wireless communication unit 41, the transmission processing unit 411, the reception processing unit 412, and the antenna 413 may be similar to those of the wireless communication unit 21, the transmission processing unit 211, the reception processing unit 212, and the antenna 213 of the base station 20. In addition, the wireless communication unit 41 may be configured to be beamformable similarly to the wireless communication unit 21. Furthermore, the wireless communication unit 41 may be configured to be able to transmit and receive a spatially multiplexed signal similarly to the wireless communication unit 21.

The storage unit 42 is a storage device capable of reading and writing data, such as a DRAM, an SRAM, a flash memory, or a hard disk. The storage unit 42 functions as a storage means of the terminal device 40.

The control unit 43 is a controller that controls each unit of the terminal device 40. The control unit 43 is implemented by, for example, a processor such as a CPU or an MPU. For example, the control unit 43 is implemented by a processor executing various programs stored in a storage device inside the terminal device 40 using a RAM or the like as a work area. Note that the control unit 43 may be implemented by an integrated circuit such as an ASIC or an FPGA. Any of the CPU, the MPU, the ASIC, and the FPGA can be regarded as a controller. In addition, the control unit 43 may be implemented by a GPU in addition to or instead of the CPU.

As illustrated in FIG. 9, the control unit 43 includes an acquisition unit 431, a transmission unit 432, and a communication control unit 433. Each of the blocks (the acquisition unit 431 to the communication control unit 433) constituting the control unit 43 is a functional block indicating a function of the control unit 43. These functional blocks may be software blocks or hardware blocks. For example, each of the functional blocks described above may be one software module implemented by software (including a microprogram), or may be one circuit block on a semiconductor chip (die). Of course, each of the functional blocks may be one processor or one integrated circuit. Note that the control unit 43 may be constituted by a functional unit different from the above-described functional blocks. A method for constituting the functional blocks is arbitrary. An operation of the control unit 43 may be the same as an operation of each of the blocks of the control unit 23 of the base station 20.

### <1.4. Construction processing>

An example of private network construction processing by the application server 50 will be described.

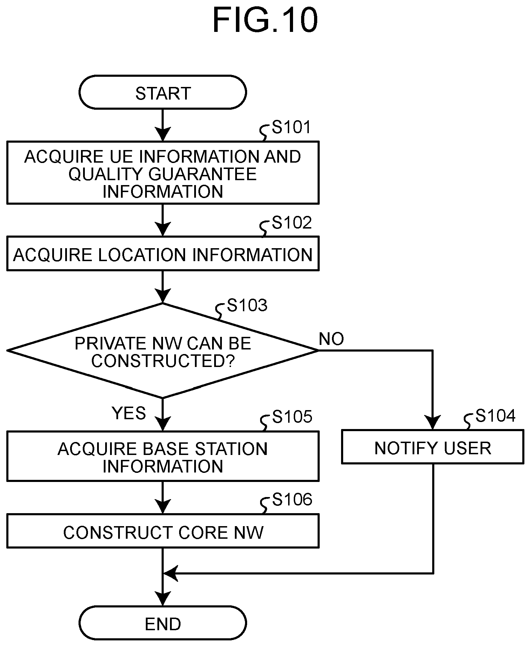

FIG. 10 is a flowchart illustrating an example of a flow of construction processing according to the first embodiment of the present disclosure. The construction processing in FIG. 10 is executed by the application server 50 in response to an instruction from a user.

First, the application server 50 acquires UE information and quality guarantee information from a user (Step S101).

The application server 50 acquires location information of the UE 40 from the wireless network NW_A using the acquired UE information (Step S102).

The application server 50 inquires of the RAN DB device 60 whether or not a private network (private NW) can be constructed using the location information and the quality guarantee information of the UE 40 (Step S103).

For example, when there is no usable base station 20B near the location of the UE 40 or there is no base station 20B capable of wireless communication satisfying requested quality near the location of the UE 40, the RAN DB device 60 notifies that the construction of the private network is impossible.

As described above, if a private network cannot be constructed (Step S103; No), the application server 50 notifies the user of the fact (Step S104), and ends the processing.

On the other hand, if a private network can be constructed (Step S103; Yes), the application server 50 acquires base station information of the base station 20B used in the private network from the RAN DB device 60 (Step S105).

The application server 50 constructs a core network (core NW) 10B using the acquired base station information (Step S106). Specifically, the application server 50 transmits a construction request to the cloud server 70 and receives a construction completion notification, thereby constructing the core network 10B.

As described above, the application server 50 according to the first embodiment of the present disclosure acquires the location information of the UE 40 on the basis of the UE information. The application server 50 acquires, from the RAN DB device 60, construction information regarding whether or not a private network can be constructed on the basis of the location information of the UE 40. The construction information can include information regarding availability of a sharing base station and information regarding whether or not a license of a used frequency can be acquired. The application server 50 generates an instance of the core network 10B in the cloud server 70 using the UE information and the location information of the UE 40.

As a result, the application server 50 can more easily construct a quality guarantee type private network. In particular, the application server 50 can more easily construct a private network by using shared base station equipment (a sharing base station, here, the base station 20B) .

### <<2. Second Embodiment>>

In the first embodiment, the application server 50 constructs a private network as a wireless network capable of guaranteeing requested quality. Alternatively, for example, the application server 50 may select a wireless network (hereinafter, also referred to as a quality guarantee type NW.) capable of guaranteeing requested quality from among a plurality of wireless networks. Such a point will be described as a second embodiment.

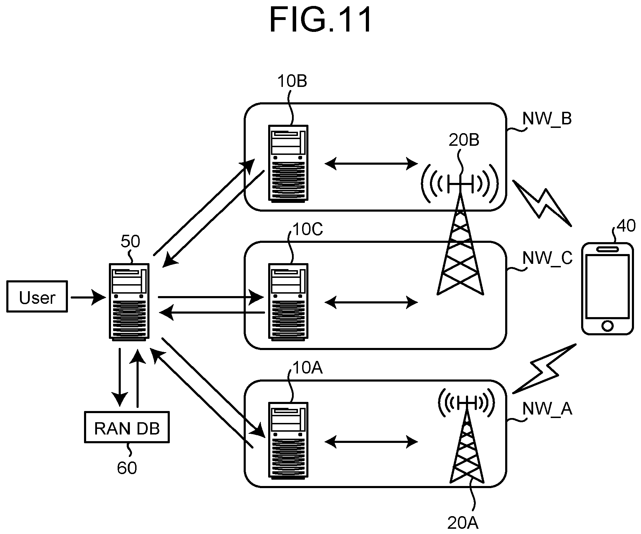

FIG. 11 is a diagram illustrating an example of an NW selection method according to the second embodiment of the present disclosure. In FIG. 11, it is assumed that the application server 50 selects a wireless network NW capable of guaranteeing requested quality from among a plurality of wireless networks NW_A, NW_B, and NW_C.

Here, the wireless network NW_A is, for example, a network operated by an operator A, and is assumed to be, for example, a public network. The wireless network NW_A includes a core network 10A and a base station 20A. It is assumed that the base station 20A is a base station that is not subjected to base station sharing and is operated by the operator A.

The wireless network NW_B is, for example, a private network constructed by the application server 50 in response to an instruction from a user. Here, a case where the wireless network NW_B is already constructed is described, but the wireless network NW_B can be constructed after selection of the wireless network NW is performed by the application server 50.

The wireless network NW_C is, for example, a network operated by the operator C, and is assumed to be, for example, a private network. The wireless network NW_C includes a core network 10C and the base station 20B. It is assumed that the base station 20B is a sharing base station. Here, the base station 20B is shared by the wireless network NW_B and the wireless network NW_C, but the base station 20B may be shared by wireless networks other than the wireless network NW_B and the wireless network NW_C. Alternatively, the wireless network NW_C may share the base station 20 with a wireless network NW other than the wireless network NW_B.

The application server 50 uses a plurality of wireless networks NW as candidates (hereinafter, also referred to as candidate networks) for a quality guarantee type wireless network NW depending on, for example, a contract based on SLA. Alternatively, the application server 50 may use a wireless network NW to which information is provided from the core network 10 as a candidate for the quality guarantee type NW.

The application server 50 selects the quality guarantee type NW from among the candidate networks (here, the wireless networks NW_A, NW_B, and NW_C) on the basis of network information regarding the candidate network.

The network information includes, for example, at least one of the following pieces of information:
· fee information regarding a usage fee of a network or a cloud service;
· base station capability information regarding capability of the base station 20, such as 5QI;
· network capability information regarding capability of the core network 10, such as QoS reference;
· radio quality information regarding radio quality such as radio wave intensity; and
· NEF I/F information that can be used in the wireless network NW and information regarding a network slice.

The application server 50 selects a quality guarantee type NW that guarantees quality requested by the user on the basis of the network information. When selecting the wireless network NW_B, the application server 50 requests the cloud server 70 to construct the core network 10B as in the first embodiment.

For example, when selecting a candidate NW other than the wireless network NW_B, such as the wireless network NW_A, the application server 50 requests the selected wireless network NW_A to communicate with the UE 40. Alternatively, the application server 50 may notify the user that the wireless network NW_A has been selected as the quality guarantee type NW.

As described above, in the second embodiment, the application server 50 selects the quality guarantee type NW from a private network and an operator network (virtual mobile network operator (VMNO)/mobile virtual network operator (MVNO)) using the network information. For example, the application server 50 determines a wireless network to which the UE 40 is connected from among a plurality of wireless networks whose operators are different from each other.

As a result, the application server 50 can more reliably provide a network that guarantees requested quality to the user.

Note that, here, the application server 50 selects the quality guarantee type NW from among a plurality of candidate networks using the wireless network NW_B that is a private network as a candidate network, but the method for selecting the quality guarantee type NW is not limited thereto.

For example, the application server 50 may select the quality guarantee type NW from among a plurality of candidate networks when the application server 50 cannot construct a private network as a result of inquiry to the RAN DB device 60.

In this case, for example, the application server 50 that has received a notification that the wireless network NW_B cannot be constructed selects a quality guarantee type NW from the wireless network NW_A and the wireless network NW_C. When the application server 50 cannot select a quality guarantee type NW that satisfies the request, the application server 50 notifies the user of the fact.

As a result, the application server 50 can present a quality guarantee type NW to the user even when the private network cannot be constructed.

### <<3. Third Embodiment>>

As described above, in the private network constructed by the application server 50, a shared frequency can be used. The application server 50 acquires permission to use the shared frequency on the basis of a system such as dynamic frequency sharing, citizens broadband radio service (CBRS), or licensed shared access (LSA). In a third embodiment, an example in which the application server 50 acquires permission to use the shared frequency and constructs a private network will be described.

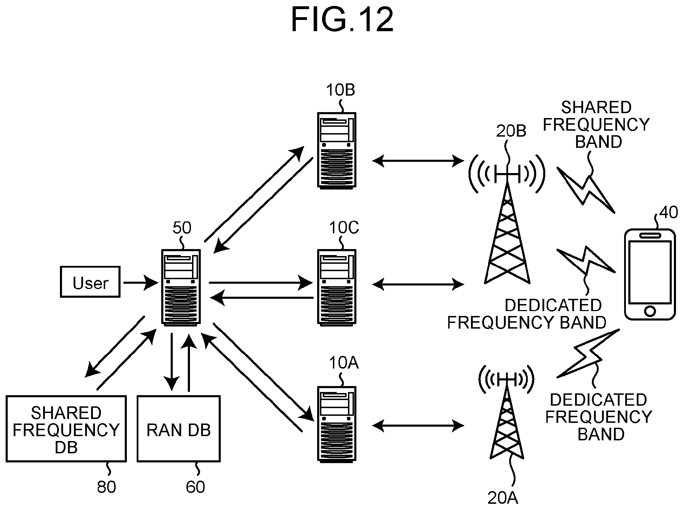

FIG. 12 is a diagram for explaining a construction example of a private network according to the third embodiment of the present disclosure.

When receiving a response indicating that a private network can be constructed from the RAN DB device 60, the application server 50 according to the present embodiment makes an inquiry to a shared frequency DB device 80 (an example of a frequency management device), and acquires assignment (use permission) of a shared frequency at the location of the UE 40.

The shared frequency DB device 80 is, for example, an information processing device that manages a shared frequency and determines whether or not sharing is possible. When there is a shared frequency that can be used at the location of the UE 40, the shared frequency DB device 80 performs assignment of the shared frequency. On the other hand, when there is no usable shared frequency at the location of the UE 40, the shared frequency DB device 80 does not perform assignment of the shared frequency.

The application server 50 that has received the assignment of the shared frequency constructs a private network as in the first embodiment. On the other hand, when the application server 50 has not received the assignment of the shared frequency, the application server 50 selects a quality guarantee type NW from among a plurality of candidate networks as in the second embodiment. It is assumed that the candidate network at this time is a network using a dedicated frequency.

Here, there is a case where the shared frequency cannot be used while the private network is providing a quality guarantee type communication service using the shared frequency. For example, a priority of a user is set to the shared frequency, and when a user with a high priority uses the shared frequency, a user with a low priority who has used the shared frequency cannot use the shared frequency. Alternatively, when a time period in which the shared frequency can be used is determined, the shared frequency cannot be used when the time period ends.

As described above, when the shared frequency cannot be used, the shared frequency DB device 80 notifies the application server 50 of stop of the use of the shared frequency.

The application server 50 that has received the notification of the stop of the use of the shared frequency selects a quality guarantee type NW from among a plurality of candidate networks as in the case where the application server 50 has not received the assignment of the shared frequency.

As a result, the application server 50 can provide a communication service by the quality guarantee type NW even when the shared frequency cannot be used.

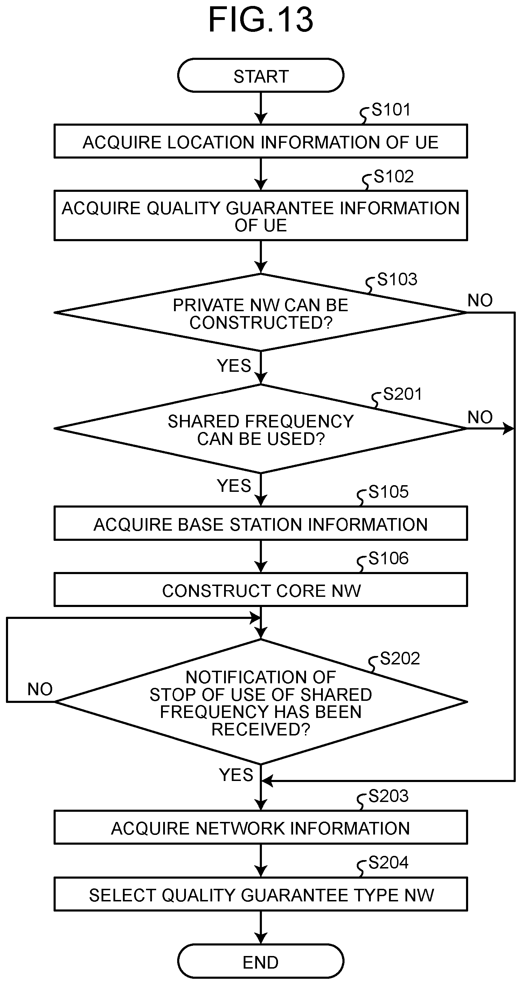

FIG. 13 is a flowchart illustrating an example of a flow of private network construction processing according to the third embodiment of the present disclosure. Note that the same processes as those in the construction processing in FIG. 10 are denoted by the same reference numerals, and description thereof may be omitted.

As illustrated in FIG. 13, if determining that a private network (private NW) cannot be constructed (Step S103; No), the application server 50 proceeds to Step S203.

On the other hand, if the private NW can be constructed (Step S103; Yes), the application server 50 determines whether or not a shared frequency can be used (Step S201). The application server 50 makes an inquiry to the shared frequency DB device 80, and determines that the shared frequency can be used when permission to use the shared frequency is obtained.

If the shared frequency cannot be used (Step S201; No), the application server 50 proceeds to Step S204.

If the shared frequency can be used (Step S201; Yes), the application server 50 proceeds to Step S104 and constructs a private network.

While a quality guarantee type communication service is provided in the private network, the application server 50 determines whether or not the private network, the application server 50 has received a notification of stop of use of the shared frequency (Step S202).

If the application server 50 has not received the notification of the stop of the use of the shared frequency (Step S202; No), the application server 50 returns to Step S202 and determines whether or not the application server 50 has received the notification of the stop of the use.

If the application server 50 has received the notification of the stop of the use of the shared frequency (Step S202; Yes), the application server 50 acquires network information of a candidate network (Step S203). The application server 50 selects a quality guarantee type NW on the basis of the network information (Step S204).

### <<4. Fourth Embodiment>>

The UE 40 may be, for example, a device whose use location moves depending on movement of a user of the UE 40, such as a smartphone. In this case, due to the movement of the UE 40, the private network constructed by the application server 50 cannot guarantee communication quality requested by the user in some cases. In a fourth embodiment, a method for guaranteeing the communication quality when the UE 40 moves will be described.

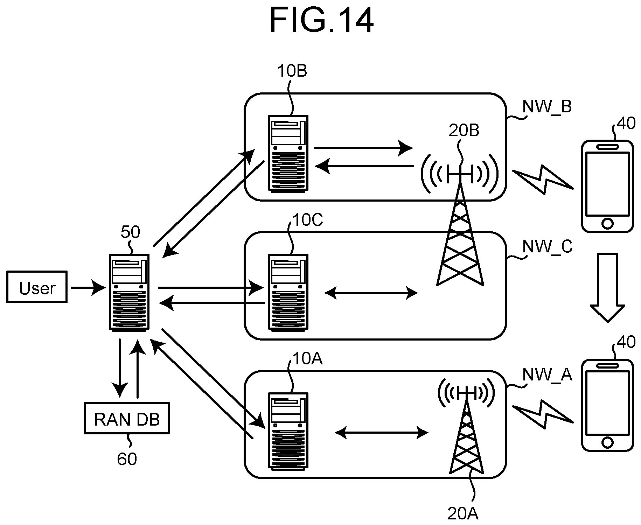

FIG. 14 is a diagram illustrating an example of an NW selection method according to the fourth embodiment of the present disclosure.

For example, it is assumed that the UE 40 is connected to the wireless network NW_B that is a private network and performs wireless communication.

In this case, for example, the application server 50 periodically acquires information of radio quality of the wireless network NW_B to which the UE 40 is connected from the core network 10B. The information of the radio quality includes, for example, information regarding radio wave intensity and a transmission rate (modulation and coding scheme (MCS)) used for communication.

As the UE 40 moves, when radio quality between the base station 20B and the UE 40 becomes equal to or less than a predetermined threshold, the application server 50 starts acquisition of the location information of the UE 40 via the wireless network NW_B.

When acquiring the location information of the UE 40, the application server 50 constructs a new private network as in the first embodiment. Alternatively, as in the second embodiment, the application server 50 may select a quality guarantee type NW from among a plurality of candidate networks (the wireless networks NW_A and NW_C in FIG. 14).

When selecting a quality guarantee type NW from among a plurality of candidate networks, the application server 50 requests the UE 40 to perform scanning in a frequency band of the wireless network NW_A that is a candidate network at the current location. The application server 50 receives, for example, information of radio wave intensity of the wireless network NW_A from the UE 40 as a scanning result.

The application server 50 selects a quality guarantee type NW on the basis of network information including the received information of the radio wave intensity of the wireless network NW_A.

As a result, even when the UE 40 moves, the application server 50 can provide a quality guarantee type communication service to the UE 40.

### <<5. Other Embodiments>>

The processing according to each of the embodiments described above may be performed in various different forms other than the embodiments described above.

For example, in each of the embodiments described above, when a network that guarantees quality requested by a user cannot be selected, for example, when a private network cannot be constructed, the application server 50 notifies the user of the fact. However, the information that the application server 50 notifies the user is not limited thereto.

For example, the application server 50 may notify the user that a quality guarantee type NW that guarantees quality requested by the user cannot be constructed, and further notify the user of information regarding quality (communication speed at which a bandwidth can be guaranteed) that can be implemented (guaranteed) at the location of the UE 40.

When the user instructs provision of a communication service whose quality is guaranteed with quality that can be implemented at the location of the UE 40, the application server 50 constructs a quality guarantee type NW that guarantees the quality.

In addition, in each of the embodiments described above, the application server 50 may notify the UE 40 of a profile of a subscriber identity module (SIM) connected to the quality guarantee type NW.

For example, when the UE 40 supports an embedded SIM (eSIM), the application server 50 may write information regarding the quality guarantee type NW to which the UE 40 is connected in the eSIM. Alternatively, the UE 40 may be connected to the quality guarantee type NW as roaming.

A control device that controls the application server 50, the RAN DB device 60, and the cloud server 70 according to the present embodiment may be implemented by a dedicated computer system or a general-purpose computer system.

For example, a communication program for executing the above-described operation is stored in a computer-readable recording medium such as an optical disk, a semiconductor memory, a magnetic tape, or a flexible disk, and distributed. Then, for example, the program is installed in a computer, and the above-described processing is executed to configure the control device. At this time, the control device may be a device (for example, a personal computer) outside the application server 50, the RAN DB device 60, and the cloud server 70. In addition, the control device may be a device (for example, the control unit 53, 63, or 73) inside the application server 50, the RAN DB device 60, and the cloud server 70.

In addition, the communication program may be stored in a disk device included in a server on a network such as the Internet such that the communication program can be downloaded to a computer. In addition, the above-described function may be implemented by cooperation of an operating system (OS) and application software. In this case, a portion other than the OS may be stored in a medium and distributed, or a portion other than the OS may be stored in a server and downloaded or the like to a computer.

Among the processes described in the above embodiments, all or some of the processes described as being performed automatically can be performed manually, or all or some of the processes described as being performed manually can be performed automatically by a known method. In addition, the processing procedure, specific name, and information including various types of data and parameters illustrated in the above description and the drawings can be arbitrarily changed unless otherwise specified. For example, the various types of information illustrated in the drawings are not limited to the illustrated information.

In addition, each component of each device illustrated in the drawings is functionally conceptual, and does not necessarily need to be physically configured as illustrated in the drawings. That is, a specific form of distribution and integration of each device is not limited to the illustrated form, and the whole or a part thereof can be functionally or physically distributed and integrated in any unit according to various loads, usage conditions, and the like. Note that this configuration by distribution and integration may be performed dynamically.

In addition, the above-described embodiments can be appropriately combined in a region in which the processing contents do not contradict each other. In addition, the order of the steps illustrated in each of the flowcharts of the above-described embodiments can be appropriately changed.

In addition, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected to each other via a network, and one device in which a plurality of modules is housed in one housing are both systems.

In addition, for example, the present embodiment can adopt a configuration of cloud computing in which one function is shared and processed by a plurality of devices in cooperation via a network.

### <<6. Conclusion>>

Although the embodiments of the present disclosure have been described above, the technical scope of the present disclosure is not limited to the above-described embodiments as they are, and various modifications can be made without departing from the gist of the present disclosure. In addition, components of different embodiments and modifications may be appropriately combined with each other. That is, at least a part of the one or more embodiments described above may be executed in combination with at least another part of the one or more embodiments described above.

In addition, the effects of the embodiments described here are merely examples and are not limited, and other effects may be provided.

Note that the present technique can also have the following configurations.
(1) An information processing device comprising:
   a network interface; and
   a processor that transmits a private network construction request to another information processing device, and
   receives a construction completion notification of the private network from the another information processing device
   via the network interface, wherein
   the another information processing device is capable of generating a core network instance, and
   the construction request is a construction request of the private network including a base station determined on a basis of location information of a UE and a request condition of the UE, and the core network instance of a core network that provides a network service via the base station.
(2) The information processing device according to (1), wherein the construction request includes at least one of identification information of the UE, the location information of the UE, identification information of the information processing device, identification information of the base station, sharing information regarding sharing of a plurality of components constituting the base station, and core network template information for generating the core network instance.
(3) The information processing device according to (2), wherein the sharing information includes first sharing information indicating that a radio device and an antenna of the base station are shared with another network, or second sharing information indicating that a central unit (CU), a distributed unit (DU), the radio device, and the antenna of the base station are shared with the another network.
(4) The information processing device according to (2) or (3), wherein the core network template information includes information regarding a network function of the core network and information for constructing the network function.
(5) The information processing device according to any one of (1) to (4), wherein
   the processor
   transmits the location information of the UE and the request condition of the UE to a management device that manages capability of one or more base stations including the base station, and
   receives, from the management device, base station information regarding the base station determined from among the one or more base stations on a basis of the location information of the UE and the request condition of the UE.
(6) The information processing device according to (5), wherein
   the base station information includes identification information of the base station, and
   the base station information further includes at least one of:
      frequency information regarding use of a shared frequency;
      license information regarding a license of a frequency used in the private network at a location indicated by the location information of the UE;
      5QI information regarding 5QI supported by the base station;
      bandwidth information regarding a maximum frequency bandwidth that can be simultaneously used by the base station;
      throughput theoretical value information regarding a theoretical value of a downlink and/or uplink throughput of the base station;
      throughput effective value information regarding an effective value of the downlink and/or uplink throughput determined by a current parameter of the base station;
      congestion information regarding a congestion situation of a radio resource provided by the base station; and
      use ratio information regarding use ratios of computing resources of the base station, the core network, and the information processing device.
(7) The information processing device according to any one of (1) to (6), wherein
   the processor
   determines a wireless network to which the UE is connected from among a plurality of wireless networks whose operators are different from each other on a basis of the request condition of the UE.
(8) The information processing device according to any one of (1) to (7), wherein
   the processor
   requests a frequency management device that manages a shared frequency to assign a shared frequency used in the private network, and
   transmits the construction request to the another information processing device when the shared frequency is assigned from the frequency management device.
(9) The information processing device according to (8), wherein
   when the shared frequency is not assigned, the processor determines a wireless network to which the UE is connected from among a plurality of wireless networks whose operators are different from each other and which use dedicated frequencies on a basis of the request condition of the UE.
(10) The information processing device according to (8) or (9), wherein
   when receiving a notification of stop of use of the shared frequency from the frequency management device during wireless communication using the shared frequency in the private network,
   the processor determines a wireless network to which the UE is connected from among a plurality of wireless networks whose operators are different from each other and which use dedicated frequencies on a basis of the request condition of the UE.
(11) The information processing device according to any one of (1) to (10), wherein
   the processor
   acquires quality information regarding radio communication quality of the UE,
   acquires the location information of the UE when the radio communication quality is equal to or less than predetermined quality, and
   determines a wireless network to which the UE is connected depending on the acquired location information of the UE.
(12) An information processing device comprising:
   a network interface; and
   a processor that receives a private network construction request from another information processing device,
   generates a core network instance of the private network, and
   transmits a construction completion notification of the private network to the another information processing device
   via the network interface, wherein
   the construction request is a construction request of the private network including a base station determined on a basis of location information of a UE and a request condition of the UE, and the core network instance of a core network that provides a network service via the base station.
(13) An information processing method comprising:
   transmitting a private network construction request to another information processing device; and
   receiving a construction completion notification of the private network from the another information processing device, wherein
   the another information processing device is capable of generating a core network instance, and
   the construction request is a construction request of the private network including a base station determined on a basis of location information of a UE and a request condition of the UE, and the core network instance of a core network that provides a network service via the base station.
(14) An information processing method comprising:
   receiving a private network construction request from another information processing device;
   generating a core network instance of the private network; and
   transmitting a construction completion notification of the private network to the another information processing device, wherein
   the construction request is a construction request of the private network including a base station determined on a basis of location information of a UE and a request condition of the UE, and the core network instance of a core network that provides a network service via the base station.

### Reference Signs List

- 10: CORE NETWORK

- 20: BASE STATION
- 40: TERMINAL DEVICE
- 50: APPLICATION SERVER
- 60: RAN DB DEVICE
- 70: CLOUD SERVER
- 80: SHARED FREQUENCY DB DEVICE

## Claims

1. An information processing device comprising:
a network interface; and
a processor that transmits a private network construction request to another information processing device, and
receives a construction completion notification of the private network from the another information processing device
via the network interface, wherein
the another information processing device is capable of generating a core network instance, and
the construction request is a construction request of the private network including a base station determined on a basis of location information of a UE and a request condition of the UE, and the core network instance of a core network that provides a network service via the base station.

2. The information processing device according to claim 1, wherein the construction request includes at least one of identification information of the UE, the location information of the UE, identification information of the information processing device, identification information of the base station, sharing information regarding sharing of a plurality of components constituting the base station, and core network template information for generating the core network instance.

3. The information processing device according to claim 2, wherein the sharing information includes first sharing information indicating that a radio device and an antenna of the base station are shared with another network, or second sharing information indicating that a central unit (CU), a distributed unit (DU), the radio device, and the antenna of the base station are shared with the another network.

4. The information processing device according to claim 2, wherein the core network template information includes information regarding a network function of the core network and information for constructing the network function.

5. The information processing device according to claim 1, wherein
the processor
transmits the location information of the UE and the request condition of the UE to a management device that manages capability of one or more base stations including the base station, and
receives, from the management device, base station information regarding the base station determined from among the one or more base stations on a basis of the location information of the UE and the request condition of the UE.

6. The information processing device according to claim 5, wherein
the base station information includes identification information of the base station, and
the base station information further includes at least one of:
frequency information regarding use of a shared frequency;
license information regarding a license of a frequency used in the private network at a location indicated by the location information of the UE;
5QI information regarding 5QI supported by the base station;
bandwidth information regarding a maximum frequency bandwidth that can be simultaneously used by the base station;
throughput theoretical value information regarding a theoretical value of a downlink and/or uplink throughput of the base station;
throughput effective value information regarding an effective value of the downlink and/or uplink throughput determined by a current parameter of the base station;
congestion information regarding a congestion situation of a radio resource provided by the base station; and
use ratio information regarding use ratios of computing resources of the base station, the core network, and the information processing device.

7. The information processing device according to claim 1, wherein
the processor
determines a wireless network to which the UE is connected from among a plurality of wireless networks whose operators are different from each other on a basis of the request condition of the UE.

8. The information processing device according to claim 1, wherein
the processor
requests a frequency management device that manages a shared frequency to assign a shared frequency used in the private network, and
transmits the construction request to the another information processing device when the shared frequency is assigned from the frequency management device.

9. The information processing device according to claim 8, wherein
when the shared frequency is not assigned, the processor determines a wireless network to which the UE is connected from among a plurality of wireless networks whose operators are different from each other and which use dedicated frequencies on a basis of the request condition of the UE.

10. The information processing device according to claim 8, wherein
when receiving a notification of stop of use of the shared frequency from the frequency management device during wireless communication using the shared frequency in the private network,
the processor determines a wireless network to which the UE is connected from among a plurality of wireless networks whose operators are different from each other and which use dedicated frequencies on a basis of the request condition of the UE.

11. The information processing device according to claim 1, wherein
the processor
acquires quality information regarding radio communication quality of the UE,
acquires the location information of the UE when the radio communication quality is equal to or less than predetermined quality, and
determines a wireless network to which the UE is connected depending on the acquired location information of the UE.

12. An information processing device comprising:
a network interface; and
a processor that receives a private network construction request from another information processing device,
generates a core network instance of the private network, and
transmits a construction completion notification of the private network to the another information processing device
via the network interface, wherein
the construction request is a construction request of the private network including a base station determined on a basis of location information of a UE and a request condition of the UE, and the core network instance of a core network that provides a network service via the base station.

13. An information processing method comprising:
transmitting a private network construction request to another information processing device; and
receiving a construction completion notification of the private network from the another information processing device, wherein
the another information processing device is capable of generating a core network instance, and
the construction request is a construction request of the private network including a base station determined on a basis of location information of a UE and a request condition of the UE, and the core network instance of a core network that provides a network service via the base station.

14. An information processing method comprising:
receiving a private network construction request from another information processing device;
generating a core network instance of the private network; and
transmitting a construction completion notification of the private network to the another information processing device, wherein
the construction request is a construction request of the private network including a base station determined on a basis of location information of a UE and a request condition of the UE, and the core network instance of a core network that provides a network service via the base station.
